# EUROPÄISCHE PATENTSCHRIFT

(11) **EP 2 227 851 B1**
(45) Veröffentlichungstag und Bekanntmachung des Hinweises auf die Patenterteilung: **16.09.2015**
(21) Anmeldenummer: 09726031.9
(22) Anmeldetag: 06.02.2009
(51) Int. Cl.: H02K 1/18, H02K 5/24

(54) **GENERATORSTATORANORDNUNG**
GENERATOR STATOR UNIT
ENSEMBLE GÉNÉRATEUR-STATOR

(30) Priorität: 22.03.2008 DE 102008015450
(43) Veröffentlichungstag der Anmeldung: 15.09.2010
(73) Patentinhaber: Voith Patent GmbH, 89522 Heidenheim (DE)
(72) Erfinder: ALTEA, Claudinei, 89522 Heidenheim (DE); BENEDETTI, Joao Carlos, 06065-160 Osasco SP (BR)
(74) Vertreter: Dr. Weitzel & Partner
(86) Internationale Anmeldenummer: PCT/EP2009/000820
(87) Internationale Veröffentlichungsnummer: WO 2009/118077

(56) Entgegenhaltungen:
- DE-A1- 2 220 420
- GB-A- 1 114 413
- JP-A- 5 030 689
- JP-A- 2000 092 756
- US-A- 1 822 096
- US-A- 3 988 622

## Beschreibung

Die Erfindung betrifft eine Generatorstatoranordnung sowie einen elektrischen Generator insbesondere zur Verwendung für ein Wasserkraftwerk mit einer solchen Generatorstatoranordnung.

Großbauende Generatorstatoren für hochpolige elektrische Synchrongeneratoren von Wasserkraftwerken mit einer vertikalen Längsachse, die zugleich die Drehachse des Generatorläufers bildet, sind in einer Vielzahl von Ausführungen bekannt. Üblicherweise umfasst ein derartiger Generatorstator eine Kombination aus einem Statorkern und einem Statorrahmen. Dabei dient der Statorrahmen zum Auffangen von dynamischen sowie statischen Lasten und erfüllt somit die Tragfunktion für den die magnetische Wirkung erzeugenden Generatorkern.

Der Generatorkern selbst umfasst eine Vielzahl von Statorblechen in Form von Ringsegmenten, typischerweise auf Basis einer Eisenlegierung. Die Statorbleche weisen zum Luftspalt des elektrischen Generators und damit zur radial inneren Peripherie hin Statorzähne auf, so dass Nuten zum Einlegen von Statorwicklungen entstehen. Die einzelnen Statorbleche sind wenigstens in den magnetisch wirksamen Bereichen gegeneinander elektrisch isoliert, dies wird durch isolierende Zwischenlagen oder durch eine Laminierung der Statorbleche bewirkt.

Beim Aufbau des Generatorstators werden typischerweise die Blechpakete dadurch gebildet, dass die Statorbleche nacheinander in Verbindung mit dem Statorrahmen gebracht werden. Dabei kommen insbesondere formschlüssige Verbindungen an der radial äußeren Peripherie der Statorbleche in Frage - hierzu wird exemplarisch auf die US 2002070630 A verwiesen, die eine Schwalbenschwanzverbindung zur Befestigung der Statorbleche an Tragrippen am Statorrahmen offenbart. Ferner ist bekannt, die einzelnen Statorbleche am Statorrahmen zu verschweißen - diesbezüglich wird auf die GB 406004 A verwiesen.

Beim Betrieb einer elektrischen Maschine werden hohe elektromagnetische Kräfte auf den Generatorstator übertragen, die diesen insbesondere für einen Rotor mit kleiner Polzahl deformieren können. Ferner können Kraft- und Momenteneinwirkungen zu Schwingungen des Generatorstators führen. Während es sich bei Normalbetrieb überwiegend um Radialschwingungen handelt, treten im Fehlerfall bei Kurzschluss Torsionsschwingungen auf. Bei Letzterem können sich dabei Betriebszustände einstellen, bei denen das nominale Luftspaltmoment bis zu einem Faktor 10 überschritten wird. Die hieraus resultierenden Schwingungsbewegungen, insbesondere Torsionsschwingungen des Generatorstators, können zu Krafteinwirkungen führen, die dessen strukturelle Festigkeit übersteigen und zerstörend wirken.

Bekannte Gegenmaßnahmen zur Abdämpfung von Schwingungen im Generatorstator umfassen eine elastische Aufhängung des Generatorkerns im Generatorstator - hierzu werden exemplarisch die GB 821612 A und die GB 695415 A genannt. Durch eine elastische Aufhängung des Statorkerns im Statorrahmen wird die Eigenfrequenz für Relativschwingungen zwischen dem Statorkern, indem die magnetischen Kräfte eingeleitet werden, und dem Statorrahmen als Tragstruktur abgesenkt. Allerdings kann insbesondere für den voranstehend beschriebenen Fehlerfall eine Schwingungsanregung und Momentenverstärkung nicht gänzlich ausgeschlossen werden.

Die Erfindung geht aus von GB 1 114 413. Dort ist eine Statoranordnung offenbart, die sich als Generatorstatoranordnung verwenden lässt. Sie umfasst einen versteiften Statorkern mit einer Mehrzahl von Statorblechen, die an der radial inneren Peripherie des Statorkernes Statorzähne aufweisen. Jedes Statorblech weist an der radial äußeren Peripherie eine stoffschlüssige Verbindung zu einem benachbarten Statorblech sowie zu einem Versteifungselement auf. Das Versteifungselement stellt zusätzlich eine Verbindung zwischen Pressring her, die an den axialen Enden des Statorkernes angeordnet sind. Zur Ausbildung einer Fundamentverbindung für den versteiften Statorkern ist eine Tragstruktur vorgesehen.

Der Erfindung liegt die Aufgabe zugrunde, eine Generatorstatoranordnung, insbesondere für großbaüende elektrische Generatoren von Wasserkraftwerken, mit einer vertikalen Drehachse anzugeben, die sich durch eine hohe Strukturfestigkeit und eine geringe Schwingungsneigung sowie durch fertigungstechnische und konstruktive Einfachheit auszeichnet.

Die der Erfindung zugrunde liegende Aufgabe wird durch die Merkmale des unabhängigen Anspruchs gelöst.

Dabei haben die Erfinder erkannt, dass eine ausfallsichere Generatorstatoranordnung dadurch entsteht, dass der eigentliche Generatorstator monolithisch und mit hoher Eigensteifigkeit ausgebildet wird und zur Entkopplung von Schwingungen eine federelastische Tragstruktur zur Ausbildung einer elastischen Fundamentverbindung gewählt wird.

Demnach wird anstatt einer Kombination aus einem die magnetische Funktion erfüllenden Statorkern und einem lasttragenden Statorrahmen ein einziger, versteifter Statorkern verwendet, der eine Doppelfunktion, nämlich die magnetische Aufgabe sowie die lastaufnehmende Aufgabe, erfüllt. Dieser versteifte Statorkern ruht dann zur Schwingungsentkopplung auf einer federelastischen Tragstruktur. Dies sind typischerweise Stützen, die mit einer geringeren Steifigkeit als die Struktursteifigkeit des versteiften Statorkerns ausgebildet sind. Demnach werden auftretende Schwingungen zu Relativbewegungen des versteiften Statorkerns gegenüber dem Fundament führen, das heißt die federelastische Tragstruktur zum Fundament hin wird die eigentlichen Schwingungen ausführen und die Deformationen des versteiften Statorkerns selbst bleiben begrenzt.

Zur Realisierung des erfindungsgemäß versteiften Statorkerns besteht eine Ausgestaltung darin, die einzelnen Statorbleche nach dem Zusammensetzen der Blechpakete auf der dem Luftspalt abgewandten Seite, das heißt der radial äußeren Peripherie, stoffschlüssig zu verbinden. Im einfachsten Fall gelingt dies durch Verschweißen aneinandergrenzender Statorbleche jeweils an wenigstens einem Verbindungspunkt. Besonders bevorzugt werden mehrere axial verlaufende und in Umfangsrichtung beabstandete Schweißnähte, die der gesamten Längserstreckung des Statorkerns folgen, an der radial äußeren Peripherie der Statorverblechung angelegt. Hierdurch werden die zunächst einzeln aufeinander gestapelten Statorbleche nach dem Ausrichten und Verpressen zu der erfindungsgemäßen monolithischen Einheit verbunden, die vorliegend als versteifter Statorkern bezeichnet wird. Ferner sind andere stoffschlüssige Verbindungstechniken, etwa Klebeverbindungen, denkbar. Außerdem werden zur Erhöhung der Strukturfestigkeit des versteiften Statorkerns die Statorbleche bevorzugt axial verpresst.

Zur stoffschlüssigen Verbindung jeweils benachbarter Statorbleche werden an der radial äußeren Peripherie Versteifungselemente vorgesehen. Typischerweise sind dies rippen- oder plattenförmige Elemente, die in stoffschlüssiger Verbindung, etwa einer Schweißverbindung, zu den einzelnen Statorblechen stehen.

Für eine besonders bevorzugte Ausgestaltung werden sowohl axial verlaufende Schweißnähte zur unmittelbaren Verbindung benachbarter Statorbleche als auch über den Außenumfang des versteiften Statorkerns verteilt angeordnete Verbindungselemente in Form von schrägstehenden Platten verwendet, die jeweils wenigstens eine entlang einer Seitenkante in Axialrichtung verlaufende Schweißnaht zur stoffschlüssigen Verbindung der Statorbleche aufweisen.

Ferner stellen für die bevorzugte Ausgestaltung die Versteifungselemente Verbindungen zwischen einem ersten Pressring und einem zweiten Pressring her, die an den axialen Enden des versteiften Statorkerns angeordnet sind. Die Pressringe wirken über Pressfinger auf die jeweils axial äußeren Statorbleche. Zusätzlich zur Verbindung des ersten Pressrings und des zweiten Pressrings über eine Vielzahl von mit den Statorblechen verschweißten Verbindungselementen kann ein Zugelement vorgesehen sein, das vom ersten Pressring zum zweiten Pressring durch fluchtend angeordnete Ausnehmungen in den Statorblechen geführt ist. Das Zugelement und die zugehörige Verbolzung werden vorzugsweise mit elektrischen Isolationsbuchsen versehen.

Gemäß einer Weiterbildung der Erfindung umfasst der versteifte Statorkern eine solche Anordnung von Versteifungselementen an der radial äußeren Peripherie mit Stoffschluss zu den Statorblechen, dass hohe Torsionsmomente aufgefangen werden können. Hierzu bietet sich eine Schräganordnung der Versteifungselemente an. Darunter wird eine Verkippung plattenförmiger Versteifungselemente gegenüber der Radialrichtung verstanden. Anders ausgedrückt bedeutet dies, dass die plattenförmigen Versteifungselemente eine in Tangentialrichtung weisende Richtungskomponente aufweisen.

Wird für eine solche Ausgestaltung wenigstens einer der Pressringe so angelegt, dass dieser über die radial äußere Peripherie der Statorbleche hinausragt, so kann ein Versteifungselement an wenigstens einer Seitenkante eine momentenabstützende Verbindung zum Pressring oder einen mit diesem in Verbindung stehenden Halteelement aufweisen. Der obere Pressring und/oder der untere Pressring weisen Ausnehmungen auf, die gegenüber der Radialrichtung geneigt sind. In eine solche Ausnehmung wird ein plattenförmig angelegtes Versteifungselement eingeführt und es wird eine Verbindung zwischen dem oberen und/oder unteren Saum des Verbindungselements und wenigstens einer der Stirnseiten der Ausnehmung, beispielsweise mittels einer Schraubverbindung, hergestellt. Erfolgt zusätzlich die erfindungsgemäße stoffschlüssige Verbindung des Versteifungselements mit wenigstens zwei Statorblechen entlang seiner angrenzenden Seitenkante, so entsteht eine Diagonalabstützung zum Auffangen von Generatormomenten und zum Abdämpfen von Torsionsschwingungen im Generatorstator.

Die federelastische Tragstruktur der Statoranordnung zur Ausbildung einer elastischen Fundamentverbindung des versteiften Statorkerns wird bevorzugt durch eine Anordnung von drei oder mehr Standfüßen mit einer Vielzahl von Blattfedern realisiert. Dabei werden mehrere Blattfedern zu einem Blattfederpaket verbunden, indem Bündelungselemente zur seitlichen Führung an beiden Enden eines Standfußes vorgesehen sind. Diese Bündelungselemente sind bevorzugt Gußeisenteile, die mehrsegmentig aufgebaut sind und die durch ein Verschrauben der Einzelteile die Blattfederelemente umfassen. Als mögliches Material der Blattfeder kommt ein Federstahl, beispielsweise ein SAE 5160 Material, in Frage.

Nachfolgend wird die Erfindung anhand von bevorzugten Ausführungsbeispielen und Figurendarstellungen genauer erläutert. In diesen ist im Einzelnen Folgendes dargestellt:
- Figur 1: zeigt in einer teilangeschnittenen, perspektivischen Darstellung eine erfindungsgemäße Generatorstatoranordnung.
- Figur 2: zeigt den federelastischen Standfuß einer erfindungsgemäßen Generatorstatoranordnung.
- Figur 3: zeigt eine weitere Ausgestaltung der erfindungsgemäßen Generatorstatoranordnung mit einem Versteifungselement.
- Figuren 4a und 4b: zeigen Axialschnitte stoffschlüssiger Verbindungen zwischen einem Statorblech und einem Versteifungselement beziehungsweise für aneinander angrenzende Statorbleche.
- Figur 5: zeigt für eine bevorzugte Ausgestaltung einer erfindungsgemäßen Generatorstatoranordnung eine Einrichtung zur axialen Verpressung der Statorbleche.

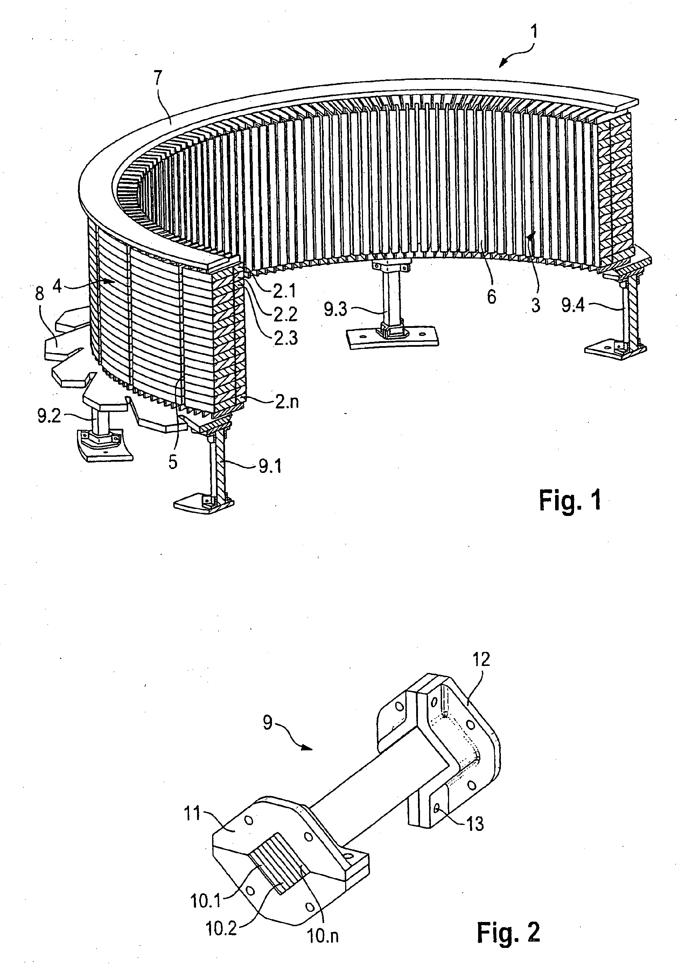

Figur 1 stellt schematisch vereinfacht eine erfindungsgemäße Generatorstatoranordnung dar. Skizziert ist die monolithische Ausbildung eines versteiften Statorkerns 1, der die Anforderungen bezüglich der magnetischen Eigenschaften und der Strukturfestigkeit erfüllt. Der versteifte Statorkern 1 stellt eine monolithische Komponente dar, bei der die ursprünglich vorliegenden Einzelkomponenten zur Erzielung einer hohen Strukturfestigkeit untereinander stoffschlüssig verbunden sind.

Für die dargestellte bevorzugte Ausgestaltung weisen die exemplarisch dargestellten Statorbleche 2.1, 2.2, 2.3, ..., 2.n, die jeweils an der radial inneren Peripherie 3 Statorzähne 6 umfassen, eine stoffschlüssige Verbindung an der radial äußeren Peripherie 4 in Form einer Schweißnaht 5 auf. Zusätzlich ist eine Einrichtung zur axialen Verpressung mittels eines ersten Pressrings 7 und eines zweiten Pressrings 8 dargestellt, die später genauer erläutert wird.

Der mit hoher Strukturfestigkeit versehene, versteifte Generatorkern 1 wird gegen das Fundament durch eine federelastische Struktur vertikal abgestützt, die in allen Bewegungsrichtungen außer der Vertikalen eine geringere Federelastizität als der versteifte Statorkern selbst aufweist. Für die bevorzugte Ausführungsform sind die Standfüße 9.1, 9.2, 9.3, 9.4 in Form von Blattfederstapeln aufgebaut, wobei die einzelnen Blattfedern in Einbaulage im Wesentlichen vertikal orientiert sind. Dies ist aus Figur 2 ersichtlich.

Der in Figur 2 skizzierte Standfuß 9 umfasst eine Vielzahl von stapelförmig aufeinander geschichteten Blattfedern 10.1, 10.2, ..., 10.n, die an den Enden gebündelt sind. Hierzu ist das erste Bündelungselement 11, das zugleich eine Verbindung zur Fundamentierung herstellt, und das zweite Büfndelungselement 12, das die Verbindung zum versteiften Generatorkern 1 ausbildet, vorgesehen. Die Bündelungselemente 11, 12 sind bevorzugt mehrsegmentige Gußteile, die mittels einer Schraubverbindung 13 zur Umfassung des Blattfederstapels zusammengefügt werden. Hierbei können die Einzelteile der Bündelungselemente 11, 12 aus Normteilen zusammengesetzt sein. Gleiches gilt für die einzelnen Blattfedern 10.1, ..., 10.n, die aus einem geeigneten Federstahl hergestellt sind.

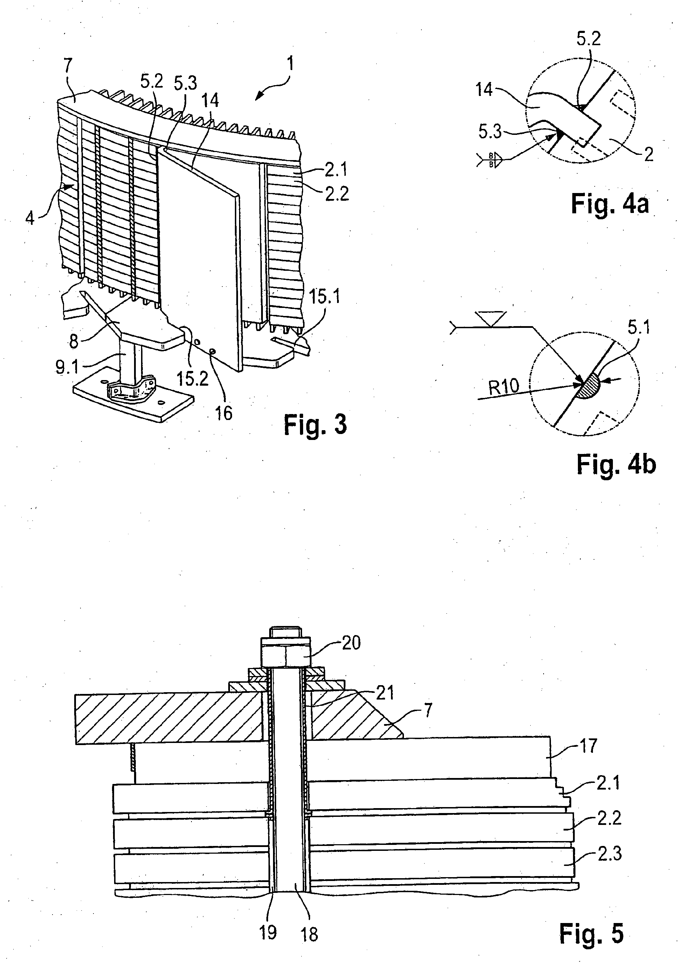

Figur 3 zeigt ein Detail einer bevorzugten Ausgestaltung für einen versteiften Statorkern 1 mit einer stoffschlüssigen Verbindung an der radial äußeren Peripherie 4 für die Statorbleche 2 - 2.n mittels eines Versteifungselements 14. Das Versteifungselement 14 ist plattenförmig angelegt und stellt mit einer ersten, den Statorblechen 2.1 - 2.n zugewandten Seitenkante eine stoffschlüssige Verbindung mittels der im Detail in Figur 4a dargestellten Schweißnähte 5.2, 5.3 her. Zusätzlich ist wenigstens eine direkte stoffschlüssige Verbindung der einzelnen Statorbleche 2.1 - 2.n mittels einer in axialer Richtung verlaufenden Schweißnaht 5.1 in Form einer Hohlkehlnaht vorgesehen - dies ist in Figur 4b skizziert. Selbstverständlich kann entlang des Außenumfangs eine Vielzahl von Verbindungselementen 14 und eine Vielzahl von unabhängig von den Verbindungselementen 14 ausgebildeten stoffschlüssigen Verbindungen entsprechend zur Schweißnaht 5.1 zur Verbindung der Statorbleche 2.1 - 2.n vorgesehen sein.

In Figur 3 ist ein Versteifungselement 14 gezeigt, das insbesondere Torsionsmomente ableitet. Hierzu ist das plattenförmig angelegte Versteifungselement 14 gegenüber der Radialrichtung in einer Winkelstellung orientiert und stützt sich diagonal gegen einen radial nach außen vorstehenden Kragen 22 am zweiten Pressring 8 ab. Ein entsprechender Kragen ist am ersten Pressring 7 vorgesehen - diese Aufführungsvariante ist im Einzelnen nicht in Figur 3 dargestellt.

Zur Vereinfachung der Montage des Versteifungselements 14 sind im Kragen 22 des zweiten Pressrings 8 Ausnehmungen 15.1, 15.2 vorgesehen. Dabei ist das in Figur 3 dargestellte Versteifungselement 14 in einer der Ausnehmungen 15.2 eingeführt und wird mittels einer Verschraubung 16 an seinem unteren Saumbereich an der Wandung der Ausnehmung 15.2 befestigt. Hierzu ist die Ausnehmung 15.2 im radial äußeren Bereich angeschnitten, so dass eine Zugänglichkeit zur Montage besteht. Demnach wird nur im radial inneren Verlauf der Ausnehmung 15.1, 15.2 das Versteifungselement 14 beidseitig durch die Wandungen der Ausnehmung umfasst. Zusätzlich zur Verschraubung 16 können weitere stoffschlüssige Verbindungen, beispielsweise eine Schweißverbindung zum Zusammenfügen des Versteifungselements 14 und des Pressrings, in diesem Fall des zweiten Pressrings 8, vorgesehen sein. Vorteilhafterweise wird bei der Montage zunächst die Verschraubung 16 ausgeführt, sodann erfolgt die Verschweißung einschließlich der Schweißnähte 5.2 und 5.3 zur Herstellung des Stoffschlusses zu den Statorblechen 2.1 - 2.n.

Figur 5 zeigt ein Ausgestaltungsdetail im Axialschnitt für die erfindungsgemäße Generatorstatoranordnung. Dargestellt ist ein Zugelement 18, das durch eine fluchtend angeordnete Ausnehmung 19 in den Generatorblechen 2.1 - 2.n geführt ist und eine Verbindung zwischen dem ersten Pressring 7 und dem zweiten, vorliegend nicht dargestellten Pressring 8 herstellt. Hierdurch werden axiale Zugkräfte auf das Blechpaket erzeugt, die über eine Vielzahl von Pressfingern 17 auf die jeweils äußeren Statorbleche wirken. Ferner ist zur elektrischen Isolation des Zugelements 18 ein Isolationselement 21 vorgesehen. Die voranstehend beschriebene axiale Zugeinrichtung zur Verpressung des Blechpakets mit den Statorblechen wird bevorzugt zusätzlich zur stoffschlüssigen Verbindung der Statorbleche an der äußeren Peripherie des versteiften Statorkerns verwendet, um diesem eine möglichst hohe Strukturfestigkeit zu verleihen.

Weitere Ausgestaltungen der Erfindung im Rahmen der nachfolgenden Schutzansprüche sind denkbar. So kann die federelastische Tragstruktur zur Ausbildung einer elastischen Fundamentverbindung für den versteiften Generatorkern radial wirksame federelastische Komponenten umfassen, die getrennt von in die Axialrichtung elastischen Federkomponenten wirken. Ferner ist es denkbar, den versteiften Statorkern durch einen in Axialrichtung flächig ausgebildeten Stoffschluss, beispielsweise mittels einer Verklebung zwischen den Statorblechen, weiter zu versteifen.

### Bezugszeichenliste

- 1: versteifter Statorkern
- 2, 2.1, 2.2, 2.3, 2.n: Statorblech
- 3: radial innere Peripherie
- 4: radial äußere Peripherie
- 5, 5.1, 5.2, 5.3: Schweißnaht
- 6: Statorzahn
- 7: erster Pressring
- 8: zweiter Pressring
- 9, 9.1, 9.2, 9.3, 9.4: Standfuß
- 10.1, 10.2, 10.n: Blattfeder
- 11: erstes Bündelungselement
- 12: zweites Bündelungselement
- 13: Schraubverbindung
- 14: Versteifungselement
- 15.1, 15.2: Ausnehmung
- 16: Verschraubung
- 17: Pressfeder
- 18: Zugelement
- 19: fluchtend angeordnete Ausnehmung
- 20: Schraubenmutter
- 21: Isolationselement
- 22: Kragen

## Patentansprüche

1. Generatorstatoranordnung, umfassend
1.1 einen versteiften Statorkern (1) mit einer Vielzahl von Statorblechen (2, 2.1, 2.2, 2.3, 2.n), die an der radial inneren Peripherie (3) des Statorkerns (1) Statorzähne (6) aufweisen, wobei jedes Statorblech (2, 2.1, 2.2, 2.3, 2.n) an der radial äußeren Peripherie (4) an wenlgstens einem Verbindungspunkt eine stoffschlüssige Verbindung zu einem benachbart angeordneten Statorblech (2, 2.1, 2.2, 2.3, 2.n) und zu einem Versteifungselement (14) aufweist; wobei das Versteifungselement (14) zusätzlich eine Verbindung zu einem ersten Pressring (7) und einem zweiten Pressring (8) herstellt, die an den axialen Enden des Statorkerns (1) angeordnet sind und wobei wenigstens einer der Pressringe (7, 8) Ausnehmungen (15.1, 15.2) umfasst, die in Schrägstellung zur Radialrichtung verlaufen und die der Aufnahme der Versteifungselemente (14) dienen; und
1.2 eine federelastische Tragstruktur zur Ausbildung einer elastischen Fundamentverbindung für den versteiften Statorkern (1).

2. Generatorstatoranordnung nach Anspruch 1, **dadurch gekennzeichnet, dass** die stoffschlüssige Verbindung als Schweißverbindung ausgebildet ist.

3. Generatorstatoranordnung nach wenigstens einem der vorausgehenden Ansprüche, **dadurch gekennzeichnet, dass** die stoffschlüssige Verbindung eine wenigstens zwei benachbarte Statorbleche (2, 2.1, 2.2, 2.3, 2.n) verbindende und axial verlaufende Schweißnaht (5, 5.1, 5.2, 5.3) umfasst.

4. Generatorstatoranordnung nach Anspruch 3, **dadurch gekennzeichnet, dass** das Versteifungselement (14) plattenförmig ausgebildet Ist und an einer ersten Seitenkante mittels einer axial verlaufenden Schweißnaht (5.2, 5.3) in stoffschlüssiger Verbindung zu wenigstens zwei Statorblechen (2, 2.1, 2.2, 2.3, 2.n) steht und an einer zweiten Seitenkante mit wenigstens einem der Pressringe (7, 8) verbunden ist.

5. Generatorstatoranordnung nach Anspruch 4, **dadurch gekennzeichnet, dass** die Verbindung des Versteifungselements (14) mit wenigstens einem der Pressringe (7, 8) eine Verschraubung (16) umfasst.

6. Generatorstatoranordnung nach einem der vorhergehenden Ansprüche, **dadurch gekennzeichnet, dass** eine Vielzahl von in Umfangsrichtung verteilten Versteifungselementen (14) an der radial äußeren Peripherie (4) des versteiften Statorkerns (1) angeordnet ist.

7. Generatorstatoranordnung nach einem der vorhergehenden Ansprüche, **dadurch gekennzeichnet, dass** mittels einer Vielzahl von Pressfingem (17), die an den beiden axialen Enden des versteiften Statorkerns (1) angeordnet sind, Axialpresskräfte auf die Statorbleche (2, 2.1, 2.2, 2.3, 2.n) ausgeübt werden.

8. Generatorstatoranordnung nach einem der vorhergehenden Ansprüche, **dadurch gekennzeichnet, dass** die federelastische Tragstruktur zur Ausbildung einer elastischen Fundamentverbindung wenigstens einen Standfuß (9, 9.1, 9.2, 9.3, 9.4) mit einer Vielzahl von Blattfedern (10.1, 10.2, ..., 10.n) umfasst.

9. Generatorstatoranordnung nach Anspruch 8, **dadurch gekennzeichnet, dass** die Blattfedern (10.1, 10.2, ..., 10.n) wenigstens an beiden Enden des Standfußes (9, 9.1, 9.2, 9.3, 9.4) ein Bündelungselement (11, 12) zur seitlichen Führung aufweisen.

10. Generatorstatoranordnung nach Anspruch 9, **dadurch gekennzeichnet, dass** das Bündelungselement (11, 12) als Gusselsenteil ausgebildet ist.

11. Generatorstatoranordnung nach einem der Ansprüche 8 -10, **dadurch gekennzeichnet, dass** die Blattfedern in Einbaulage im Wesentlichen vertikal orientiert sind.

12. Elektrischer Synchrongenerator, insbesondere für ein Wasserkraftwerk, umfassend eine Generatorstatoranordnung nach einem der vorhergehenden Ansprüche.

## Claims

1. A generator stator configuration, comprising
1.1 a stiffened stator core (1) having a multitude of stator plates (2, 2.1, 2.2, 2.3, 2.n), which have stator teeth (6) on the radial inner periphery (3) of the stator core (1), each stator plate (2, 2.1, 2.2, 2.3, 2.n) having a material bond on the radial outer periphery (4) on at least one connection point to an adjacent stator plate (2, 2.1, 2.2, 2.3, 2.n) and/or to a stiffening element (14); the stiffening element (14) additionally produces a connection between a first compression ring (7) and a second compression ring (8), which are situated at the axial ends of the stator core (1), at least one of the compression rings (7, 8) having recesses (15.1, 15.2), which run in a diagonal position to the radial direction, and which are used to receive the stiffening elements (14); and
1.2 a spring-elastic support structure for implementing an elastic foundation connection for the stiffened stator core (1).

2. The generator stator configuration according to Claim 1, **characterized in that** the material bond is implemented as a weld bond.

3. The generator stator configuration according to at least one of the preceding claims, **characterized in that** the material bond comprises a weld seam (5, 5.1, 5.2, 5.3), which connects at least two adjacent stator plates (2, 2.1, 2.2, 2.3, 2.n) and runs axially.

4. The generator stator configuration according to Claim 3, **characterized in that** the stiffening element (14) is implemented as plate-shaped and has a material bond to at least two stator plates (2, 2.1, 2.2, 2.3, 2.n) on a first side edge using an axially running weld seam (5.2, 5.3), and is connected to at least one of the compression rings (7, 8) on a second side edge.

5. The generator stator configuration according to Claim 4, **characterized in that** the connection of the stiffening element (14) to at least one of the compression rings (7, 8) comprises a screw connection (16).

6. The generator stator configuration according to one of the preceding claims, **characterized in that** a multitude of stiffening elements (14), which are distributed around the circumference, is provided on the radial outer periphery (4) of the stiffened stator core (1).

7. The generator stator configuration according to one of the preceding claims, **characterized in that** axial compression forces are exerted on the stator plates (2, 2.1, 2.2, 2.3, 2.n) using a multitude of compression fingers (17), which are situated on the two axial ends of the stiffened stator core (1).

8. The generator stator configuration according to one of the preceding claims, **characterized in that** the spring-elastic support structure for implementing an elastic foundation connection comprises at least one foot (9, 9.1, 9.2, 9.3, 9.4) having a multitude of leaf springs (10.1, 10.2, ..., 10.n).

9. The generator stator configuration according to Claim 8, **characterized in that** the leaf springs (10.1, 10.2, ..., 10.n) have a bundling element (11, 12) for lateral guiding at least on both ends of the foot (9, 9.1, 9.2, 9.3, 9.4).

10. The generator stator configuration according to Claim 9, **characterized in that** the bundling element (11, 12) is implemented as a cast-iron part.

11. The generator stator configuration according to one of Claims 8 - 10, **characterized in that** the leaf springs are oriented essentially vertically in the installed position.

12. An electrical synchronous generator, in particular for a hydroelectric plant, comprising a generator stator configuration according to one of the preceding claims.

## Revendications

1. Dispositif de stator de générateur, comprenant
1.1 un noyau de stator raidi (1) avec une pluralité de tôles de stator (2, 2.1, 2.2, 2.3, 2.n) qui présentent des dents de stator (6) sur la périphérie radiale intérieure (3) du noyau de stator (1), chaque tôle de stator (2, 2.1, 2.2, 2.3, 2.n) présentant sur la périphérie radiale extérieure (4), en au moins un point d'assemblage, un assemblage par solidarité de matière avec une tôle de stator (2, 2.1, 2.2, 2.3, 2.n) voisine et avec un élément raidisseur (14), l'élément raidisseur (14) créant en outre un assemblage avec un premier anneau de serrage (7) et un deuxième anneau de serrage (8) disposés à l'extrémité axiale du noyau de stator (1) et au moins un des anneaux de serrage (7, 8) présentant des découpes (15.1, 15.2) orientées en oblique par rapport au sens radial et servant à recevoir les éléments raidisseurs (14) ; et
1.2 une structure portante élastique à la manière d'un ressort, formant un assemblage élastique de socle pour le noyau de stator raidi (1).

2. Dispositif de stator de générateur selon la revendication 1, **caractérisé en ce que** l'assemblage par solidarité de matière est réalisé comme un assemblage soudé.

3. Dispositif de stator de générateur selon l'une au moins des revendications précédentes, **caractérisé en ce que** l'assemblage par solidarité de matière comprend au moins une soudure (5, 5.1, 5,2, 5.3) assemblant au moins deux tôles de stator (2, 2.1, 2.2, 2.3, 2.n) voisines et courant dans le sens axial.

4. Dispositif de stator de générateur selon la revendication 3, **caractérisé en ce que** l'élément raidisseur (14) est en forme de plaque et est assemblé par solidarité de matière sur un premier bord latéral, au moyen d'une soudure (5.2, 5.3) courant dans le sens axial, avec au moins deux tôles de stator (2, 2.1, 2.2, 2.3, 2.n) et assemblé sur un deuxième bord latéral avec au moins un des anneaux de serrage (7, 8).

5. Dispositif de stator de générateur selon la revendication 4, **caractérisé en ce que** l'assemblage de l'élément raidisseur (14) avec au moins un des anneaux de serrage (7, 8) comprend un vissage (16).

6. Dispositif de stator de générateur selon l'une des revendications précédentes, **caractérisé en ce que** plusieurs éléments raidisseurs (14) répartis dans le sens de la circonférence sont disposés sur la périphérie radiale extérieure (4) du noyau de stator raidi (1).

7. Dispositif de stator de générateur selon l'une des revendications précédentes, **caractérisé en ce que** de forces de serrage axiales sont exercées sur les tôles de stator (2, 2.1, 2.2, 2.3, 2.n) au moyen de plusieurs pattes de serrage (17) disposées aux deux extrémités axiales du noyau de stator raidi (1).

8. Dispositif de stator de générateur selon l'une des revendications précédentes, **caractérisé en ce que** la structure portante élastique comprend pour former un assemblage élastique de socle au moins un pied d'appui (9, 9.1, 9.2, 9.3, 9.4) avec plusieurs ressorts à lames (10.1, 10.2, ..., 10.n).

9. Dispositif de stator de générateur selon la revendication 8, **caractérisé en ce que** les ressorts à lames (10.1, 10.2, ..., 10.n) présentent, au moins aux deux extrémités du pied d'appui (9, 9.1, 9.2, 9.3, 9.4), un élément de liaison en faisceau (11, 12) pour leur guidage latéral.

10. Dispositif de stator de générateur selon la revendication 9, **caractérisé en ce que** l'élément de liaison en faisceau (11, 12) est conformé comme une pièce en fonte.

11. Dispositif de stator de générateur selon l'une des revendications 8 à 10, **caractérisé en ce que** les ressorts à lames sont orientés sensiblement à la verticale dans leur position de montage.

12. Générateur électrique synchrone, en particulier pour une centrale de génération hydroélectrique, comprenant un dispositif de stator de générateur selon l'une des revendications précédentes.
